# EUROPEAN PATENT SPECIFICATION

(11) **EP 1 909 027 B1**
(45) Date of publication and mention of the grant of the patent: **24.03.2010**
(21) Application number: 07117109.4
(22) Date of filing: 25.09.2007
(51) Int. Cl.: F21V 19/04

(54) **Expulsion mechanism for a lighting element**
Ausstossmechanismus für ein Beleuchtungselement
Mécanisme d'expulsion pour élément d'éclairage

(30) Priority: 06.10.2006 IT MI20060344 U
(43) Date of publication of application: 09.04.2008
(73) Proprietor: iGUZZINI ILLUMINAZIONE S.p.A., 62019 Recanati-Macerata (IT)
(72) Inventor: Gattari, Massimo, 62018 Potenza Picena (Macerata) (IT)
(74) Representative: De Gregori, Antonella

(56) References cited:
- EP-A- 0 933 591
- US-A- 4 614 015

## Description

The present invention refers to an expulsion mechanism for a lighting element that has substantial characteristics of usefulness and ease of use.

There are known lighting apparatuses, referred to as projectors, which comprise a substantially cylindrical body that can be rotated about an arm ready for installation on a wall or on a ceiling. Such lighting apparatuses are usually used to directly and accurately light up a given target and they are normally provided on their inside with a single lighting element.

For constructive and design reasons, the main body of the projectors intended in particular for lighting rooms usually has a narrow space inside of it, just sufficient to contain the relative lighting element, in particular in the case in which the lighting element is made in the form of a bulb that can be pressure-inserted inside the projector, from the output mouth of the light beam and in the axial direction with respect to the body of the projector itself.

Such a pressure-inserted lighting device does indeed require a manoeuvring space inside the body of the projector that is sufficient in order to make it grippable. In particularly small projectors it is therefore simple to insert the bulb intended for pressure-mounting, but it is not so easy to remove it, since the bulb must undergo a traction that is often difficult to carry out due to the lack of space to insert the finger inside the projector so as to correctly grip the bulb itself.

Therefore, if it is not carried out with the due precision, the removal of the bulb can even result in damage to the electrical contacts inside the projector, with the consequent need for onerous repairs or even replacement of the entire projector.

A lighting apparatus provided with bulb extraction means is known, for example, from document US-A-4 614 015, which discloses an expulsion mechanism for a lighting element according to the preamble of claim 1.

The purpose of the present invention is therefore to make an expulsion mechanism for the lighting element of a lighting apparatus that is able to eliminate the aforementioned drawbacks, making it easier to remove the lighting element and avoiding possible damage to the projector.

Another purpose of the present invention is to make an expulsion mechanism for the lighting element of a lighting apparatus that is particularly simple and functional, with low costs.

These purposes according to the present invention are accomplished by making an expulsion mechanism for a lighting element as outlined in claim 1.

Further characteristics of the invention are outlined by the subsequent claims.

The characteristics and advantages of an expulsion mechanism for a lighting element according to the present invention shall become clearer from the following description, given as a non-limiting example, referring to the attached schematic drawings, in which:

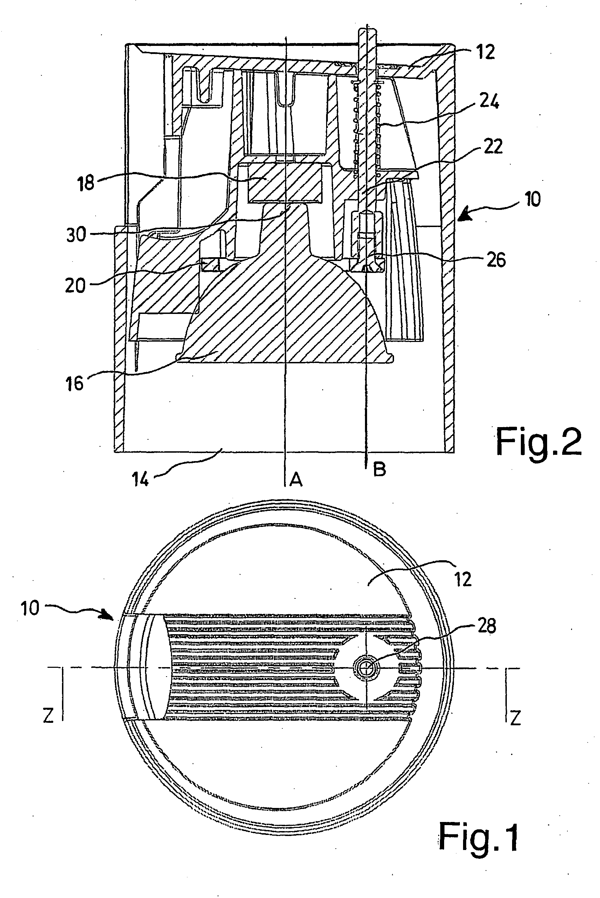

Figure 1 is a plan view from above of a lighting apparatus provided with the expulsion mechanism according to the invention; and
Figure 2 is a section view obtained along the line Z-Z of the lighting apparatus of figure 1.

With reference to the figures, a generic lighting apparatus of the projector type is schematically shown, wholly indicated with reference numeral 10, comprising a substantially cylindrical outer casing equipped with a rear wall 12 and with an open front side 14 to allow the emission of the light beam generated by a lighting element 16 arranged inside said projector 10.

The projector 10 is usually manufactured in metal, for example by aluminium pressure casting, whereas the lighting element 16 can for example consist of a discharge lamp or else a halogen lamp, fed either at the mains voltage or at low voltage through the interposition of a suitable transformer; the lamp 16 is configured for insertion by pushing into its housing base 18, in the direction of the middle axis A of the projector 10.

As well as the lamp 16, the projector 10 can contain all of the devices necessary for the correct operation of the lighting apparatus inside of it, in other words possible walls and/or reflective screens, reactors, transformers and various electrical components, such devices not being described here in detail since they are of the substantially known type in the state of the art.

According to the invention, inside the projector 10 and, more precisely, at the lamp 16 once it has been inserted in operative position in its housing base 18, there is an expulsion mechanism consisting of a thrusting element 20 that at least partially wraps around the lamp 16, fixedly connected to an actuation means 22 in the form of a pin that can be operated by a user and provided with elastic means 24 for automatically returning into rest position.

In particular, according to a preferred example embodiment, the thrusting element 20 is arranged, in rest position, not resting upon the lamp 16 and consists of a disc or an equivalent element, made from metal or rigid plastic, in any case configured to completely wrap around the lamp 16. The disc 20 is indeed provided with a central hole to allow the rear portion 30 of the lamp 16 to pass inside it, during installation, so as to easily insert its electrical connection feet (not shown) into the corresponding housing base 18.

The disc 20 is therefore fixedly connected to the actuation pin 22 through one or more screws 26 although, alternatively, it is also possible to make the disc 20 and the relative pin 22 in a single piece. For the sake of ease of actuation, the end portion of the pin 22 that can be operated by the user projects from a suitable hole 28 made, in the illustrated example embodiment, on the rear wall 12 of the projector 10.

Again with reference to the illustrated example embodiment, the elastic return means 24 of the expulsion mechanism according to the invention comprise a coil spring that allows the disc 20 to return into rest position after the mechanism has been actuated to expel the lighting element 16.

Operatively, to remove the lamp 16 from the projector 10 using the expulsion mechanism according to the invention, the user acts upon the pin 22, counteracting the action of the spring 24, so that the disc 20 pushes the lamp 16 towards the opening 14, thus disengaging it from its housing base 18. So that such an operation is carried out as correctly as possible, it is necessary for the movement of all of the components that make up the expulsion mechanism to be directed along an axis B substantially parallel to the axis A along which the insertion and removal movement of the lamp 16 takes place. In addition to this, the special configuration of the thrusting element 20, which preferably completely wraps around the lamp 16, ensures a rectilinear and uniform movement of the lamp 16 itself along its axis A in the removal step, thus preventing any possibility of damage or distortion of the electrical connection feet of the lamp 16 and, more generally, of the projector 10 as a whole.

When the lamp 16 has been completely removed from the projector 10 the pin 22 is released, which, thanks to the decompression action of the spring 24, takes the disc 20 back into rest position, in a position sufficiently withdrawn towards the housing base 18 so that the disc 20 itself does not interfere in the insertion and connection step of a new lamp 16 inside the projector 10.

It has thus been seen that the expulsion mechanism for a lighting element according to the present invention achieves the purposes outlined earlier, allowing the simple and automatic removal of a pressure-inserted lamp, also with particularly compact and slender projectors, with little space inside them to insert a finger.

In addition, the special configuration of the components of the expulsion mechanism, as well as their direction of movement, avoid any possibility of damage to the lamp, unlike what can occur in the manual removal step of the lamp itself.

## Claims

1. Expulsion mechanism for a lighting element (16) that can be pressure-inserted in a suitable housing base (18) formed inside a lighting apparatus (10), consisting of at least one thrusting element (20) that at least partially wraps around said lighting element (16) and is fixedly connected to an actuation means (22) that can be operated by a user, **characterised in that** said at least one thrusting element (20) is mobile along an axis (B) substantially parallel to the axis (A) along which the insertion and disinsertion movement of said lighting element (16) takes place.

2. Expulsion mechanism according to claim 1, **characterised in that** said actuation means (22) is provided with elastic means (24) for the automatic return into rest position of said at least one thrusting element (20).

3. Expulsion mechanism according to claim 2, **characterised in that** said elastic means (24) comprise at least one coil spring.

4. Expulsion mechanism according to claim 1, **characterised in that** said actuation means (22) consists of a pin whose end portion that can be operated by the user projects from a suitable hole (28) made on one of the walls (12) of said lighting apparatus (10).

5. Expulsion mechanism according to claim 1, **characterised in that** said thrusting element (20) is arranged resting upon said lighting element (16) and consists of a disc that completely wraps around said lighting element (16).

6. Expulsion mechanism according to claim 5, **characterised in that** said disc (20) is provided with a central hole to allow the rear portion (30) of said lighting element (16) to pass inside it, during installation, so as to easily insert its electrical connection feet into the corresponding housing base (18).

7. Expulsion mechanism according to claim 1, **characterised in that** said thrusting element (20) is fixedly connected to said actuation means (22) through one or more screws (26).

8. Expulsion mechanism according to claim 1, **characterised in that** said thrusting element (20) and said actuation means (22) are made in a single piece.

## Patentansprüche

1. Ausstoßmechanismus für ein Beleuchtungselement (16), das in eine geeignete, innerhalb einer Beleuchtungsvorrichtung (10) ausgebildete Aufnahmebasis (18) eingedrückt werden kann, bestehend aus zumindest einem Ausschubelement (20), welches das Beleuchtungselement (16) wenigstens teilweise umgreift und fest mit einer Betätigungseinrichtung (22) verbunden ist, die durch einen Benutzer bedienbar ist,
**dadurch gekennzeichnet, dass** das zumindest eine Ausschubelement (20) längs einer Achse (B) beweglich ist, die im Wesentlichen parallel zu der Achse (A) ist, längs der die Einsetz- und Herausnehmbewegung des Beleuchtungselements (16) stattfindet.

2. Ausstoßmechanismus nach Anspruch 1,
**dadurch gekennzeichnet, dass** die Betätigungseinrichtung (22) mit elastischen Mitteln (24) zur automatischen Rückstellung in eine Ruhestellung des zumindest einen Ausschubelements (20) versehen ist.

3. Ausstoßmechanismus nach Anspruch 2,
**dadurch gekennzeichnet, dass** die elastischen Mittel (24) wenigstens eine Schraubenfeder aufweisen.

4. Ausstoßmechanismus nach Anspruch 1,
**dadurch gekennzeichnet, dass** die Betätigungseinrichtung (22) aus einem Stift besteht, dessen von dem Benutzer bedienbarer Endabschnitt aus einer geeigneten Öffnung (28) herausragt, die in einer der Wände (12) der Beleuchtungsvorrichtung (10) vorhanden ist.

5. Ausstoßmechanismus nach Anspruch 1,
**dadurch gekennzeichnet, dass** das Ausschubelement (20) am Beleuchtungselement (16) anliegend angeordnet ist und aus einer Scheibe besteht, die das Beleuchtungselement (16) vollständig umgreift.

6. Ausstoßmechanismus nach Anspruch 5,
**dadurch gekennzeichnet, dass** die Scheibe (20) mit einer zentralen Öffnung versehen ist, um dem rückwärtigen Abschnitt (30) des Beleuchtungselements (16) beim Einbau ein Hindurchtreten zu gestatten, um seine elektrischen Anschlussfüße ohne Umstände in die entsprechende Aufnahmebasis (18) einzuführen.

7. Ausstoßmechanismus nach Anspruch 1,
**dadurch gekennzeichnet, dass** das Ausschubelement (20) mittels einer oder mehrerer Schrauben (26) fest mit der Betätigungseinrichtung (22) verbunden ist.

8. Ausstoßmechanismus nach Anspruch 1,
**dadurch gekennzeichnet, dass** das Ausschubelement (20) und die Betätigungseinrichtung (22) einstückig ausgeführt sind.

## Revendications

1. Mécanisme d'expulsion pour un élément d'éclairage (16) qui peut être inséré par pression dans une base de boîtier (18) appropriée, formée à l'intérieur d'un appareil d'éclairage (10), se composant d'au moins un élément de poussée (20) qui s'enroule au moins partiellement autour dudit élément d'éclairage (16) et est raccordé de manière fixe à des moyens d'actionnement (22) qui peuvent être actionnés par un utilisateur, **caractérisé en ce que** ledit au moins un élément de poussée (20) est mobile le long d'un axe (B) sensiblement parallèle à l'axe (A) le long duquel le mouvement d'insertion et de désinsertion dudit élément d'éclairage (16) a lieu.

2. Mécanisme d'expulsion selon la revendication 1, **caractérisé en ce que** lesdits moyens d'actionnement (22) sont équipés de moyens élastiques (24) pour le retour automatique dans la position de repos dudit au moins un élément de poussée (20).

3. Mécanisme d'expulsion selon la revendication 2, **caractérisé en ce que** lesdits moyens élastiques (24) comprennent au moins un ressort hélicoïdal.

4. Mécanisme d'expulsion selon la revendication 1, **caractérisé en ce que** lesdits moyens d'actionnement (22) se composent d'une broche dont la partie d'extrémité qui peut être actionnée par l'utilisateur, fait saillie d'un trou (28) approprié réalisé sur l'une des parois (12) dudit appareil d'éclairage (10).

5. Mécanisme d'expulsion selon la revendication 1, **caractérisé en ce que** ledit élément de poussée (20) est agencé au repos sur ledit élément d'éclairage (16) et se compose d'un disque qui est complètement enroulé autour dudit élément d'éclairage (16).

6. Mécanisme d'expulsion selon la revendication 5, **caractérisé en ce que** ledit disque (20) est prévu avec un trou central pour permettre à la partie arrière (30) dudit élément d'éclairage (16) de passer à l'intérieur de celui-ci, pendant l'installation, afin d'insérer facilement ses pieds de raccordement électrique dans la base de boîtier (18) correspondante.

7. Mécanisme d'expulsion selon la revendication 1, **caractérisé en ce que** ledit élément de poussée (20) est raccordé de manière fixe auxdits moyens d'actionnement (22) par une ou plusieurs vis (26).

8. Mécanisme d'expulsion selon la revendication 1, **caractérisé en ce que** ledit élément de poussée (20) et lesdits moyens d'actionnement (22) sont réalisés d'un seul tenant.
